# EUROPÄISCHE PATENTSCHRIFT

(11) **EP 0 612 947 B1**
(45) Veröffentlichungstag und Bekanntmachung des Hinweises auf die Patenterteilung: **23.07.1997**
(21) Anmeldenummer: 94101087.8
(22) Anmeldetag: 25.01.1994
(51) Int. Cl.: F16L 21/08, F16L 37/092

(54) **Schubgesicherte Muffenverbindung**
Socket joint with means for locking against axial forces
Joint verrouillé à emboîtement

(30) Priorität: 27.01.1993 DE 4302215
(43) Veröffentlichungstag der Anmeldung: 31.08.1994
(73) Patentinhaber: EISENWERKE FRIED. WILH. DÜKER GmbH & Co., D-97753 Karlstadt (DE)
(72) Erfinder: Vorbeck, Manfred, D-63846 Laufach (DE)
(74) Vertreter: Patentanwälte Leinweber & Zimmermann

(56) Entgegenhaltungen:
- EP-A- 0 235 818
- DE-A- 2 754 984
- DE-A- 3 117 225
- DE-U- 9 311 500
- US-A- 3 724 880
- PATENT ABSTRACTS OF JAPAN vol. 14, no. 583 (M-1064) 26. Dezember 1990 & JP-A-02 253 079 (SEKISUI CHEM CO LTD) 11. Oktober 1990

## Beschreibung

Die Erfindung bezieht sich auf eine schubgesicherte Steckmuffe, insbesondere für Formstücke sowie für im Schleudergußverfahren hergestellte Muffenrohre, bei der das Spitzende des einen Rohres mit radialem Spiel in das Muffenende des anderen Rohres einschiebbar ist, in dem ein Dichtring und ein von diesem getrennt ausgebildeter Klemmring angeordnet sind, der aus einer Vielzahl von in Umfangsrichtung mit gegenseitigem Abstand angeordneten Klemmsegmenten besteht, die eine ballig ausgebildete äußere Mantelfläche aufweisen, in Umfangsrichtung jeweils durch eine anvulkanisierte Zwischenschicht aus Gummi o. dgl. miteinander verbunden sind und auf ihrer Innenfläche jeweils eine Zahnung aufweisen, die bei Auftreten von axialen Kräften durch Zusammenwirken der balligen Mantelfläche mit einer sich konisch zum Ende verjüngenden Innenfläche der Rohrmuffe radial gegen das Spitzende drücken, wobei an den Klemmring ein am Muffenstirnende festlegbares, ihn tragendes Halteteil aus Elastomer angeformt ist, das einen an der Muffenstirnfläche zur Anlage gelangenden ringscheibenförmigen Abschnitt sowie einen sich vom Innenrand der Muffenstirnfläche zum Klemmring erstreckenden, sich etwa konisch verjüngenden Verbindungsabschnitt umfaßt, der in Abhängigkeit von den Außenabmessungen des einzuführenden Spitzendes zusammen mit dem Klemmring aufweitbar und dabei in axialer Richtung dehnbar ist, wobei von dem an der Muffenstirnfläche zur Anlage gelangenden ringscheibenförmigen Abschnitt, der durch verstärkte Ausbildung eine erhöhte Biegesteifigkeit besitzt, der zum Klemmring führende Verbindungsabschnitt ausgeht, und wobei die Muffenstirnfläche innenrandseitig einen dem Querschnitt des verstärkt ausgebildeten ringscheibenförmigen Abschnitts angepaßten Ausnehmungsbereich aufweist.

Bei einer Steckmuffenverbindung dieser Art gemäß DE 41 34 089 A1 haben sich bei groß dimensionierten Muffenrohren und entsprechend groß bemessenen Klemmringen insofern Stabilitätsprobleme gezeigt, als während der Handhabung der Muffenrohre die Klemmringe ihre kreisförmige Geometrie verlieren und in sich zusammenfallen können. Dies bringt auch ein erschwertes Einlegen des Klemmrings in die Verriegelungskammer mit sich, was in der Folge die Montage der Steckmuffenverbindung bei Einführung des Spitzendes des einen Rohres in das Muffenende des anderen Rohres wesentlich erschwert.

Der Erfindung liegt die Aufgabe zugrunde, die schubgesicherte Steckmuffenverbindung der vorgenannten Art so weiter auszubilden, daß auf relativ einfache Weise eine bessere Lagesicherung bei Festlegung des Halteteils des Klemmrings mit seinen Klemmsegmenten an der Innenfläche der Muffe vor und insbesondere während des Einschiebens des Rohrspitzendes in die Muffe gewährleistet ist, und zwar insbesondere auch dann, wenn es sich um Muffenrohre mit extrem hohen Nennweiten handelt.

Die schubgesicherte Steckmuffenverbindung nach der Erfindung, bei der diese Aufgabe gelöst ist, zeichnet sich im wesentlichen dadurch aus, daß der Klemmring mit den Klemmsegmenten und der letztere in Umfangsrichtung verbindenden, anvulkanisierten Zwischenschicht auf der dem scheibenförmigen Abschnitt abgewandten rückwärtigen Seite mit einer Umfangsausnehmung, in welcher ein biegesteifer Stützring aufgenommen ist, versehen ist.

Bei einer solchen Ausbildung des Klemmrings der Steckmuffenverbindung lassen sich vor und während des Zusammensteckens der Rohre auch dann die Klemmringe in ihnen einwandfrei festlegen, wenn es sich um Muffenrohre mit sehr hoher Nennweite von NW 600 bis 1000 und darüber handelt. Die Gefahr eines selbständigen Lösens und Zusammenfallens der Ringe am Muffenstirnende ist praktisch gebannt. Dadurch ist auch während der Montage ein sicheres Hineinschieben des Spitzendes des einen Rohres in das Muffenende des anderen Rohres gewährleistet.

An dieser Stelle ist zu erwähnen, daß es bereits bekannt ist (JP 4-29693, 3-84293 und 2-253079 A2), Klemmsegmente derart in Bezug zueinander in einer muffenartigen Ausnehmung eines Rohres anzuordnen, daß sie mit einem gezahnten Bereich ein eingeschobenes Spitzende erfassen und in seiner Lage sichern können. Den Klemmsegmenten ist ein so ausgebildeter und derart bemessener Ring bzw. eine Serie von ringabschnittförmigen Ringteilen zugeordnet, daß mit dessen bzw. deren Hilfe die Klemmsegmente berührungslos im Abstand voneinander und in axialer Ausrichtung in Bezug zueinander gehalten werden, jedoch die Möglichkeit haben, sich den örtlichen Gegebenheiten in radialer Richtung anzupassen.

Dieser Stützring kann in die Umfangsausnehmung einvulkanisiert sein, d.h. mit dem Klemmring eine Baueinheit bilden. Als in fertigungstechnischer Hinsicht besonders vorteilhaft hat es sich jedoch erwiesen, wenn in der Umfangsausnehmung ein den aufgenommenen Stützring fixierender Haltering aus elastomerem Material festgelegt ist.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigen
- Fig. 1: einen Schnitt durch das Spitzende eines Rohres mit
übergeschobenem Muffenende des angrenzenden Rohres und
- Fig. 2: einen Ausschnitt aus Fig. 1, in größerem Maßstab.

Wie aus der Zeichnung ersichtlich, weist das Muffenrohr 1 an seinem einen Ende, dem Muffenende 2 eine Muffe auf, in die mit radialem Spiel das Spitzende 3 eines angrenzenden Muffenrohres 1 eingeschoben werden kann. Im Inneren der Muffe ist eine Ausnehmung 4 vorgesehen, die in bestimmten Grenzen eine Relativverschwenkung der Rohre 1 zuläßt. Im Anschluß an diese Ausnehmung ist eine Abdichtungskammer 5 gebildet, die an ihrem einen Ende durch eine radial verlaufende Innenschulter 6 des Muffenendes 2 begrenzt ist. Im Abstand von der Innenschulter 6 verläuft im Bereich der Abdichtungskammer 5 ein Ringwulst 7. Dieser dient der Lagesicherung eines Dichtrings 8, der einen Kopfabschnitt 9 aus weicherem elastomerem Material und einen Fußabschnitt 10 aus härterem elastomerem Material aufweist. Dieser Fußabschnitt 10 befindet sich in einer Ringnut 11, die einerseits von dem Ringwulst 7 und andererseits von einer Stützschulter 12 begrenzt ist, die gleichzeitig das andere Ende der Abdichtungskammer 5 begrenzt. Der Dichtring 8 ist auf diese Weise in seiner Position festgelegt und behält die veranschaulichte Position auch dann bei, wenn das Spitzende 3 unter Verformung des Kopfabschnitts 9 in das Muffenende 2 eingeführt wird. Zwischen der Stützschulter 12 und dem stirnseitigen Ende des Muffenendes 2 befindet sich eine Verriegelungskammer 13, die der Aufnahme eines Klemmrings 14 dient. Dieser Klemmring 14 besteht aus einer Vielzahl von in Umfangsrichtung mit gegenseitigem Abstand angeordneten Klemmsegmenten 15. Die Klemmsegmente 15 sind in Umfangsrichtung jeweils durch eine in der Zeichnung nicht dargestellte anvulkanisierte Zwischenschicht aus Gummi o. dgl. miteinander verbunden. Auf ihrer der Verriegelungskammer 13 zugewandten Seite weisen die Klemmsegmente 15 jeweils eine ballig ausgebildete äußere Mantelfläche 17 auf. Diese wirkt mit einer sich konisch zum Ende verjüngenden Innenfläche 18 der Rohrmuffe zusammen, und zwar wird durch sie eine auf der Innenfläche der Klemmsegmente 15 jeweils vorgesehene Zahnung 19 bei Auftreten von axialen Kräften radial gegen das Spitzende 3 gedrückt.

Wie aus der Zeichnung hervorgeht, ist an den Klemmring 14 ein am Muffenstirnende festlegbares, ihn tragendes Halteteil 20 aus Elastomer angeformt. Dieses Halteteil 20 kann einen nicht dargestellten an der Außenseite des Muffenendes zur Anlage gelangenden ringzylindrischen Abschnitt umfassen, sowie einen sich ggf. anschließenden, an der Muffenstirnfläche 22 zur Anlage gelangenden ringscheibenförmigen Abschnitt 23. Im gezeigten Beispiel ist ein sich vom Innenrand der Muffenstirnfläche zum Klemmring 14 erstreckender, sich in entspanntem Zustand etwa konisch verjüngender Verbindungsabschnitt 24 vorgesehen, der vom ringscheibenförmigen Abschnitt 23 ausgeht, der besonders stark ausgebildet ist und eine höhere Biegesteifigkeit besitzt. Der Verbindungsabschnitt 24 ist in Abhängigkeit von den Außenabmessungen des einzuführenden Spitzendes 3 zusammen mit dem Klemmring 14 aufweitbar und dabei in axialer Richtung dehnbar, so daß er schließlich die in der Zeichnung gezeigte aufgeweitete Form erhält.

Aus der Zeichnung geht ferner hervor, daß der Verbindungsabschnitt 24 des Halteteils 20 an der balligen Mantelfläche 17 des Klemmrings 14, die der sich konisch verjüngenden Innenfläche 18 des Muffenendes zugewandt ist, mit einer isolierenden Auflage 25 versehen ist, die dazu dient, die miteinander verbundenen Rohre elektrisch voneinander zu isolieren. Diese Auflage 25 kann durch eine Emailschicht oder durch eine glasfaserverstärkte Kunststoffschicht gebildet sein.

Wie aus der Zeichnung entnehmbar, weist die Muffenstirnfläche 22 innenrandseitig einen dem Querschnitt des verstärkt ausgebildeten ringscheibenförmigen Abschnitts 23 angepaßten Ausnehmungsbereich 27 auf. Mit diesen Maßnahmen wird dazu beigetragen, daß das Halteteil 20 des Klemmrings mit seinen Klemmsegmenten 15 an der Innenfläche 18 der Muffe vor allem bei Steckmuffenverbindungen für große Nennweiten sowohl vor als auch während des Einschiebens des Rohrspitzendes in die Muffe anliegt. Dies wird durch die erhöhte Biegesteifigkeit aufgrund der verstärkten Ausbildung des Abschnitts 23 mit einem etwa rechteckigen Querschnitt gefördert. Dabei ist der Ausnehmungsbereich der Muffenstirnfläche durch eine innenrandseitige Abstufung 27 gebildet.

Vor allem bei Halteteil-Klemmring-Einheiten für Muffenrohre sehr großer Nennweiten ist es von Vorteil, dem verstärkt ausgebildeten ringscheibenförmigen Abschnitt 23 des Halteteils einen die Biegesteifigkeit erhöhenden Stahlring 28 zuzuordnen. Für diesen Stahlring 28 ist im Abschnitt 23 ein axialer Einführspalt 29 vorgesehen, durch den der Stahlring bei Bedarf eingesetzt und ggf. wieder entnommen werden kann. Die Halterung wird dabei durch Wahl einer Breite des Einführspalts 29, die kleiner als der Durchmesser des Stahlrings 28 bemessen ist, begünstigt.

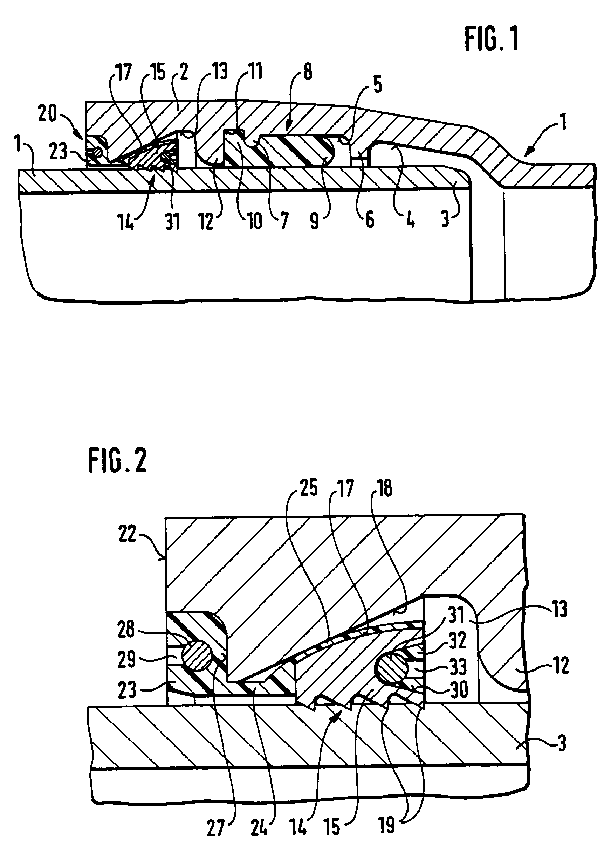

Wie insbesondere Fig. 2 zeigt, ist der Klemmring 14 mit den Klemmsegmenten 15 und der letztere in Umfangsrichtung verbindenden anvulkanisierten Zwischenschicht auf der dem ringscheibenförmigen Abschnitt 23 abgewandten rückwärtigen Seite mit einer Umfangsausnehmung 30 versehen, die der Aufnahme eines biegesteifen, vorzugsweise aus Stahl bestehenden Stützrings 31 dient. Zu diesem Zweck ist bei der gezeigten Ausführung in der Umfangsausnehmung 30 ein den Stützring 31 fixierender Haltering 32 aus elastomerem Material festgelegt. Die Umfangsausnehmung 30 des Klemmrings 14 ist in axialer Richtung zur dem ringscheibenförmigen Abschnitt 23 abgewandten Seite hin offen und erweitert sich in dieser Richtung. Der in dieser Umfangsausnehmung 30 fixierte Haltering 32 ist mit einem axialen Einführspalt 33 für den Stützring 31 versehen. Die Breite dieses Einführspalts 33 ist kleiner bemessen, als der Durchmesser des Stützrings 31.

## Patentansprüche

1. Schubgesicherte Steckmuffenverbindung, insbesondere für Formstücke sowie für im Schleudergußverfahren hergestellte Muffenrohre (1), bei der das Spitzende (3) des einen Rohres mit radialem Spiel in das Muffenende (2) des anderen Rohres einschiebbar ist, in dem ein Dichtring (8) und ein von diesem getrennt ausgebildeter Klemmring (14) angeordnet sind, der aus einer Vielzahl von in Umfangsrichtung mit gegenseitigem Abstand angeordneten Klemmsegmenten (15) besteht, die eine ballig ausgebildete äußere Mantelfläche (17) aufweisen, in Umfangsrichtung jeweils durch eine anvulkanisierte Zwischenschicht aus Gummi o. dgl. miteinander verbunden sind und auf ihrer Innenfläche jeweils eine Zahnung (19) aufweisen, die bei Auftreten von axialen Kräften durch Zusammenwirken der balligen Mantelfläche (17) mit einer sich konisch zum Ende verjüngenden Innenfläche (18) der Rohrmuffe radial gegen das Spitzende (3) drücken, wobei an den Klemmring (14) ein am Muffenstirnende festlegbares, ihn tragendes Halteteil (20) aus Elastomer angeformt ist, das einen an der Muffenstirnfläche (22) zur Anlage gelangenden ringscheibenförmigen Abschnitt (23) sowie einen sich vom Innenrand der Muffenstirnfläche (22) zum Klemmring (14) erstreckenden, sich etwa konisch verjüngenden Verbindungsabschnitt (24) umfaßt, der in Abhängigkeit von den Außenabmessungen des einzuführenden Spitzendes (3) zusammen mit dem Klemmring (14) aufweitbar und dabei in axialer Richtung dehnbar ist, wobei von dem an der Muffenstirnfläche (22) zur Anlage gelangenden ringscheibenförmigen Abschnitt (23), der durch verstärkte Ausbildung eine erhöhte Biegesteifigkeit besitzt, der zum Klemmring (15) führende Verbindungsabschnitt (24) ausgeht, und wobei die Muffenstirnfläche (22) innenrandseitig einen dem Querschnitt des verstärkt ausgebildeten ringscheibenförmigen Abschnitts (23) angepaßten Ausnehmungsbereich aufweist, dadurch gekennzeichnet, daß der Klemmring (14) mit den Klemmsegmenten (15) und der letztere in Umfangsrichtung verbindenden, anvulkanisierten Zwischenschicht auf der dem scheibenförmigen Abschnitt (23) abgewandten rückwärtigen Seite mit einer Umfangsausnehmung (30), in der ein biegesteifer Stützring (31) angeordnet ist, versehen ist.

2. Steckmuffenverbindung nach Anspruch 1, dadurch gekennzeichnet, daß in der Umfangsausnehmung (32) ein den aufgenommenen Stützring (31) fixierender Haltering (32) aus elastomerem Material festgelegt ist.

3. Steckmuffenverbindung nach Anspruch 1 oder 2, dadurch gekennzeichnet, daß der Stützring (31) aus Stahl besteht.

4. Steckmuffenverbindung nach einem der Ansprüche 2 bis 3, dadurch gekennzeichnet, daß die Umfangsausnehmung (30) des Klemmrings (14) in axialer Richtung zur dem ringscheibenförmigen Abschnitt (23) abgewandten Seite hin offen ist und daß der in der Umfangsausnehmung (30) fixierte Haltering (32) mit einem axialen Einführspalt (33) für den Stützring (31) versehen ist.

5. Steckmuffenverbindung nach Anspruch 4, dadurch gekennzeichnet, daß die Breite des Einführspalts (33) kleiner bemessen ist als der Durchmesser des Stützrings (31).

## Claims

1. Thrust-locked spigot-and-socket joint, in particular for shaped parts as well as for centrifugally cast spigot pipes (1), in which the spigot end (3) of the one pipe is insertable with radial clearance into the socket end (2) of the other pipe, in which are disposed a sealing ring (8) and a clamping ring (14), which is separate from the sealing ring and comprises a plurality of clamping segments (15) which are disposed a mutual distance apart in a peripheral direction, have a crowned outer lateral surface (17), are connected to one another in a peripheral direction in each case by an intermediate layer of rubber or the like vulcanized thereon and each have on their inner surface teeth (19) which in the event of axial forces, by virtue of cooperation of the crowned lateral surface (17) with an inner surface (18) of the pipe socket which tapers conically towards the end, press radially against the spigot end (3), wherein there is formed on the clamping ring (14) a retaining part (20) made of elastomer, which carries the clamping ring, is fixable to the socket front end and comprises an annular-disc-shaped portion (23), which comes to lie against the socket end face (22), as well as a substantially conically tapering connection portion (24), which extends from the inside edge of the socket end face (22) to the clamping ring (14) and may, in dependence upon the external dimensions of the spigot end (3) to be introduced, widen together with the clamping ring (14) and in so doing may stretch in axial direction, wherein the connection portion (24) leading to the clamping ring (15) emanates from the annular-disc-shaped portion (23), which comes to lie against the socket end face (22) and by virtue of a reinforced construction has an increased flexural strength, and wherein the socket end face (22) at the inside edge has a recess region adapted to the cross section of the reinforced annular-disc-shaped portion (23), characterized in that the clamping ring (14) with the clamping segments (15) and with the intermediate layer, which is vulcanized thereon and connects the clamping segments in a peripheral direction, is provided at the rear side remote from the disc-shaped portion (23) with a peripheral recess (30), in which a flexurally stiff supporting ring (31) is disposed.

2. Spigot-and-socket joint according to claim 1, characterized in that fixed in the peripheral recess (32) is a retaining ring (32) made of elastomeric material which fixes the received supporting ring (31) in position.

3. Spigot-and-socket joint according to claim 1 or 2, characterized in that the supporting ring (31) is made of steel.

4. Spigot-and-socket joint according to one of claims 2 to 3, characterized in that the peripheral recess (30) of the clamping ring (14) is open in an axial direction towards the side remote from the annular-disc-shaped portion (23) and that the retaining ring (32) fixed in the peripheral recess (30) is provided with an axial insertion gap (33) for the supporting ring (31).

5. Spigot-and-socket joint according to claim 4, characterized in that the width of the insertion gap (33) is smaller than the diameter of the supporting ring (31).

## Revendications

1. Raccord verrouillé à emboîtement, en particulier pour pièces façonnées ainsi que pour tuyaux à emboîtement (1) fabriqués suivant le procédé de moulage par coulée centrifuge, dans lequel l'extrémité effilée (3) d'un tuyau est apte à être introduite par coulissement, avec un jeu radial, dans l'extrémité de manchon (2) de l'autre tuyau, où sont disposés une bague d'étanchéité (8) et un anneau de serrage (14) formé séparé de cette bague, anneau qui se compose d'une pluralité de segments de serrage (15) disposés à distance mutuelle suivant la direction périphérique, lesquels segments présentent une surface enveloppe extérieure (17) de forme convexe, sont reliés les uns aux autres dans la direction périphérique respectivement par une couche intermédiaire en caoutchouc ou similaire vulcanisée , et comportent respectivement une denture (19) sur leur surface interne, segments qui , lors de l'apparition de forces axiales, exercent radialement une pression contre l'extrémité effilée (3) par coopération de la surface enveloppe (17) convexe avec une surface interne (18) du manchon de tube se rétrécissant selon une forme conique vers l'extrémité, raccord dans lequel une pièce de retenue (20) en matière élastomère est moulée sur l'anneau de serrage (14), cette pièce étant apte à être fixée sur l'extrémité frontale du manchon et portant l'anneau de serrage, pièce qui comprend une section (23) en forme de disque annulaire venant en appui contre la surface frontale (22) du manchon, ainsi qu'une section de liaison (24) se rétrécissant selon une forme à peu près conique, s'étendant du bord intérieur de la surface frontale (22) du manchon jusqu'à l'anneau de serrage (14), section qui peut s'élargir avec l'anneau de serrage (14) en fonction des dimensions extérieures de l'extrémité effilée (3) à introduire, et qui de plus est extensible dans la direction axiale, raccord dans lequel la section de liaison (24) conduisant à l'anneau de serrage (15) provient de la section (23) en forme de disque annulaire venant en appui contre la surface frontale (22) du manchon, section qui possède une raideur à la flexion accrue par une configuration renforcée, et raccord dans lequel la surface frontale (22) du manchon comporte du côté de son bord intérieur une zone évidée adaptée à la section transversale de la section (23) en forme de disque annulaire à configuration renforcée,
caractérisé par le fait que l'anneau de serrage (14), avec les segments de serrage (15) et la couche intermédiaire vulcanisée reliant ces derniers dans la direction périphérique, est muni du côté arrière, éloigné de la section (23) en forme de disque annulaire, d'un évidement périphérique (30) dans lequel est disposée une bague d'appui (31) raide en flexion.

2. Raccord à emboîtement selon la revendication 1, caractérisé par le fait qu'une bague de retenue (32) en matière élastomère est fixée dans l'évidement périphérique (30), cette bague de retenue fixant la bague d'appui (31) reçue dans l'évidement.

3. Raccord à emboîtement selon la revendication 1 et 2, caractérisé par le fait que la bague d'appui (31) se compose d'acier.

4. Raccord à emboîtement selon l'une des revendications 2 à 3, caractérisé par le fait que l'évidement périphérique (30) de l'anneau de serrage (14) est ouvert dans la direction axiale du côté opposé à la section en forme de disque annulaire (23) et que la bague de retenue (32) fixée dans l'évidement périphérique (30) est munie d'une fente d'insertion axiale (33) pour la bague d'appui (31).

5. Raccord à emboîtement selon la revendication 4, caractérisé par le fait que la largeur de la fente d'insertion (33) a une dimension plus faible que le diamètre de la bague d'appui (31).
